# EUROPEAN PATENT APPLICATION

(11) **EP 3 660 421 A1**
(43) Date of publication of application: **03.06.2020**
(21) Application number: 18382866.4
(22) Date of filing: 29.11.2018
(51) Int. Cl.: F25C 1/147

(54) **SPINDLE FOR AN ICE MACHINE**

(71) Applicant: Industria Tecnica Valenciana, S.A., 46394 Riba-roja de Turia - Valencia (ES)
(72) Inventor: CORDON, Cristina, 46394 RIBA-ROJA DE TURIA - VALENCIA (ES)
(74) Representative: Urizar Anasagasti, Jesus Maria

(57) **Abstract**

A spindle for an ice machine comprising an essentially cylindrical body (1), which on a first end (1a) has a hollow for the insertion thereof into the corresponding area of the ice machine, and on a second end (1b) it incorporates a shaft designed to be attached to a reducer motor or another element able to transmit a torque force thereto such that it provides the continuous movement thereof; and wherein the body (1) has on the outer surface thereof, a double-pitch helix (2), wherein the pitch of the helix will be in proportion to the diameter thereof, and the height of the helix in proportion to the core thereof.

## Description

### DESCRIPTION

### Object of the invention

The object of the present specification is a spindle for an ice machine, the main and distinctive characteristic of which is based on improving the efficiency in cutting ice due to the double helix thereof and to the clearance they have, achieving that the formed layer of ice is reduced more, and in this manner less effort is necessary than in other similar solutions.

### Background of the invention

Generally, in the state of the art a spindle is a long screw with a large diameter, used in different means for the actuation of several elements or clamping in clamps or presses.

Although it is true that in a multitude of machines, spindles are used as movement elements wherein the threads or helices that they have serve to knead, such as in the case of flours or meats; and/or for scratching/scraping some type of element adhered to a surface along which it runs transversally, such as in the practical example on which we are focusing, which are ice-making machines.

In this last case, the one relating to ice-making machines, the evaporator of the machine is a vertical cylinder made of stainless steel, on which an outer jacket is located (through which the refrigerant circulates) which cools the inner surface of the cylinder, and wherein a water-feeding system using communicating vessels maintains the level on the inside of the cylinder, and the ice starts to form on the inner wall of the evaporator.

Therefore, the spindle will be housed inside said cylinder and will be very close to the wall, therefore, by means of a rotation (actuated by a reducer motor) will start laminating the layer of ice.

These types of solutions have limited efficiency, and given that they leave a greater clearance than the solution proposed herein, thus, it is common for a first layer of ice to form with a depth such that the spindle is not able to reach it and pull it from the inner wall of the cylinder where it is formed.

The use of a double helix therein enables greater efficiency, for which reason the clearance is smaller, for which reason the layer of ice in the evaporator is larger, worsening the exchange and the performance.

The simple solutions will require more effort than the one proposed herein, since they do not have a negative cutting angle (produced by the double helix), this implies that the dragging torque is increased and, therefore, the power of the necessary actuation.

All of this implies more inner noise as a consequence of more effort being used. And in turn, this implies more pumping of water in the upper portion, producing ice with more moisture than with the solution presented herein, which produces ice with less moisture.

### Description of the invention

The technical problem solved by the present invention is achieving a spindle for an ice machine, which enables the layer of ice produced inside the evaporator to be laminated more efficiently. To do so, the spindle for an ice machine, object of the present specification, comprises an essentially cylindrical body, which on a first end has a hollow for the insertion thereof into the corresponding area of the ice machine, and on a second end it incorporates a shaft designed to be attached to a reducer motor or another element able to transmit a torque force to it such that it provides the continuous movement thereof; and that is characterized in that the body has, on the outer surface thereof, a double-pitch helix, wherein the pitch of the helix will be in proportion to the diameter thereof, and the height of the helix in proportion to the core thereof.

Due to the design thereof, the spindle contemplated herein will improve the efficiency given that the double helix thereof added to the smaller clearance causes the layer of ice in the evaporator to be reduced more, improving the exchange and the performance.

This causes less effort to be necessary due to the negative cutting angle caused by the double helix, since the dragging torque decreases and, therefore, the necessary actuation power likewise decreases.

The decrease in inner noise as a consequence of the use of a reduced tip of the tooth of the spindle, which prevents the laminating on the ice from producing excessive noise, as occurs in the machines known in the state of the art. This affects the admissible noise levels from a point of view of the perspective of health and safety in the workplace, diminishing the noise generated by the assembly of the machine where it is used, and, therefore, in the arrangement chosen for it.

The use of this spindle, and the increase in efficiency thereof as far as the practically complete lamination of the ice generated inside the cylinder which makes up the evaporator, makes it possible for less water pumping to be required in order to generate the ice and, therefore, the cost of raw materials necessary to generate ice is reduced. This reflects, with a lower water level present in the evaporator, in the fact that the ice produced will have a lower degree of moisture (dryer ice) than any similar solution proposed in the state of the art.

Thus, in summary, the use of the spindle causes it to cut and detach the layer of ice that continuously forms inside the cylinder of the evaporator, and in turn, evacuate the ice to the upper portion thereof, compressing it against an "extruder" of an ice machine forcing it to pass through the outlet channels thereof, under an operating principle of "Archimedes' screw".

### Brief description of the figures

What follows is a very brief description of a series of drawings that aid in better understanding the invention, and which are expressly related to an embodiment of said invention that is presented by way of a non-limiting example of the same.

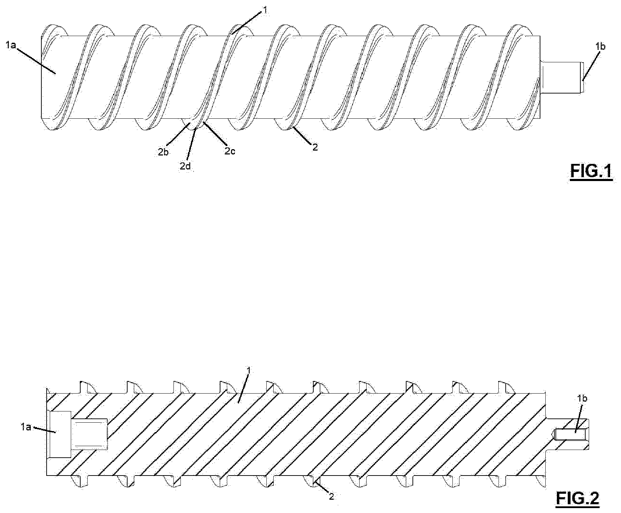

- FIG. 1.: Shows a view of the spindle for an ice machine, object of the present specification.
- FIG. 2.: Shows a view of a cross section of the spindle for an ice machine.
- FIG. 3.: Shows a view of a front cross section of the spindle, wherein a detailed view can be seen of the shape of the helix as a part thereof.
- FIG. 4.: Shows a detailed view of the tooth of the helix as part of the spindle for an ice machine, object of the present specification.

### Description of a detailed embodiment of the invention

The attached figures show a preferred embodiment of the invention. More specifically, the spindle for an ice machine, object of the present invention, is characterized in that it comprises an essentially cylindrical body (1), and wherein on a first end (1a) it has a hollow for the insertion thereof into the corresponding area of the ice machine, and on a second end (1b) it incorporates a shaft designed to be attached to a reducer motor or another element able to transmit a torque force to it such that it provides the continuous movement thereof.

And wherein the body (1) has on the outer surface thereof, a double-pitch helix (2), wherein the pitch of the helix will be in proportion to the diameter thereof, and the height of the helix in proportion to the core.

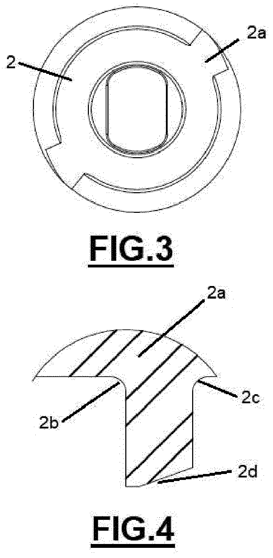

As shown in figure 4, the tooth (2a) of the helix will have a curved shape in the upper portion thereof, wherein two cutting areas (2b, 2c) will be defined which are both responsible for laminating the ice, and wherein, in the lower portion thereof, it has a flat area (2d) located at a certain angle with respect to the shaft defined by the very body (1). And wherein all of this added to the small clearance that is produced after the installation thereof will provide continuous cutting in the area of the inside of the cylinder of the evaporator, mentioned previously.

## Claims

1. A spindle for an ice machine comprising an essentially cylindrical body (1), which on a first end (1a) has a hollow for the insertion thereof into the corresponding area of the ice machine, and on a second end (1b) it incorporates a shaft designed to be attached to a reducer motor or another element able to transmit a torque force thereto such that it provides the continuous movement thereof; and that is **characterized in that** the body (1) has, on the outer surface thereof, a double-pitch helix (2), wherein the pitch of the helix will be in proportion with the diameter thereof, and the height of the helix in proportion to the core thereof.

2. The spindle for an ice machine according to claim 1, wherein the tooth (2a) of the helix has a curved shape in the upper portion thereof, wherein two cutting areas (2b, 2c) are defined which are both responsible for laminating the ice, and wherein, in the lower portion thereof, it has a flat area (2d) located at a certain angle with respect to the shaft defined by the body (1) itself.
